Europäisches Patentamt

(19) European Patent Office

Office européen des brevets

(11) Publication number: **0 134 351**
**A1**

## (12) EUROPEAN PATENT APPLICATION

(21) Application number: **83305046.1**

(22) Date of filing: **01.09.83**

(51) Int. Cl.⁴: **C 22 B 34/22**
**C 21 C 1/04, C 21 C 5/46**

(43) Date of publication of application:
**20.03.85 Bulletin 85/12**

(84) Designated Contracting States:
**AT BE CH DE FR GB IT LI LU NL SE**

(71) Applicant: **NEW ZEALAND STEEL LIMITED**

**Glenbrook South Auckland(NZ)**

(72) Inventor: **Bates, Peter Cecil**
**39 Kitchener Road**
**Waiuku Auckland(NZ)**

(72) Inventor: **Clark, Norman Edward**
**23 Rosehill Drive**
**Papakura Auckland(NZ)**

(74) Representative: **Carpmael, John William Maurice et al,**
**CARPMAELS & RANSFORD 43 Bloomsbury Square**
**London, WC1A 2RA(GB)**

(54) Recovery of vanadium oxide.

(57) This invention relates to the recovery of vanadium oxide from molten metal. The invention provides a method for recovering vanadium oxide from molten metal (3), which includes passing oxygen (8) and at least one coolant gas or shroud (9) into the molten metal (3) by way of at least one elongate lance (2). The invention also provides an arrangement for the recovery of vanadium oxide from molten metal (3), which includes at least one elongate lance (2) extending into the molten metal (3). The lance (2) is provided with at least one elongate bore (7), extending therethrough. Means are provided to allow at least oxygen (8) and at least one coolant gas (9) to pass through the lance (2) and into the molten metal (3).

EP 0 134 351 A1

./...

FIG. 1.

## BACKGROUND TO THE INVENTION

This invention relates to the recovery and manufacture of vanadium oxide.

Up until this time, various methods and techniques have been used for the recovery or oxidation of vanadium during the manufacture of iron and steel, but most if not all of these have been particularly expensive in so far as both initial capital cost is concerned and in so far as operating costs are concerned. Also, they have not been as successful as often claimed.

One known form of extraction of vanadium involves a shaking or vibrating ladel method, where a ladel is placed in a cradle that provides agitation or shaking to the molten metal. A lance or lances are provided which blow oxygen onto the surface of the metal. The ladel is formed of a shape and configuration such as to provide an interior wave like action that allows fresh metal to be exposed to the top blown oxygen. The capital cost of this system is high due to the large cranes that are required to handle the ladel full of molten metal.

The actual shaking ladel also requires an agitating or shaking stand which is a large engineering item which must by necessity withstand the large forces required to impart the stirring action to the molten metal.

All these requirements involve substantial cost, both from a capital and operating point of view.

Another known method is the use of a water cooled copper lance that is emersed just beneath the surface of a ladel. This relies on induction stirring of the metal from an external induction coil to enable new metal to be circulated into the area of oxygen supply from the lance.

Again, it is found that this system is expensive in that it also involves a requirement for non-magnetic stainless steel in the side of the ladel in the area where it is in close proximity to, or adjacent, the induction coil referred to above. Also it is found that induction coils of the size required are very expensive.

## SUMMARY OF THE INVENTION

According to one aspect of this invention there is provided a method of recovering vanadium oxide from molten metal, including passing oxygen and at least one coolant gas or shroud into said molten metal through at least one elongate lance.

According to a further aspect of this invention there is provided an arrangement for the recovery of vanadium oxide from molten metal, including at least one elongate lance extending into said molten metal; said lance being provided with at least one elongate bore extending therethrough; means being provided to allow at least oxygen and at least one coolant gas or shroud to pass through said lance into said molten metal.

## BRIEF DESCRIPTION OF DRAWINGS

The invention will now be described by way of example only, and with reference to the drawings, wherein;

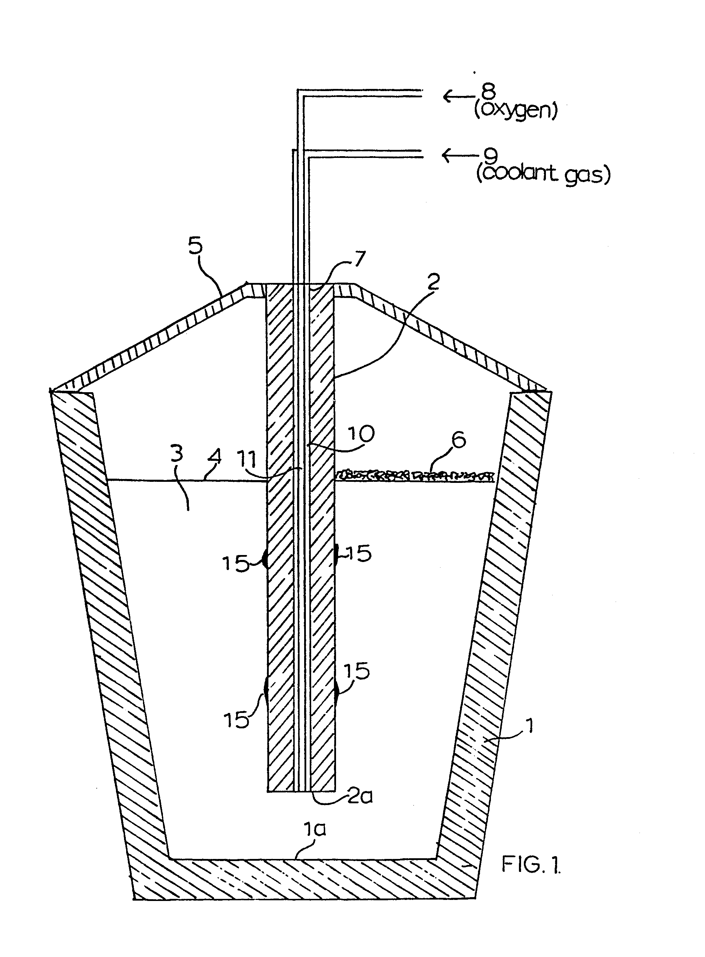

Figure 1: is a sectional view of a vanadium recovery arrangement according to one form of the invention.

## DESCRIPTION OF THE INVENTION

Up until this time, numerous methods and means of producing a vanadium rich slag from liquid iron containing vanadium have been utilised.

Systems devised up until this time, all suffer from one or more disadvantages such as high capital costs, high operating costs, slow speed of reaction; in addition, known arrangements are relatively complicated and difficult to control.

The present invention discloses a method and arrangement of passing oxygen into liquid, vanadium containing iron for the purpose of forming vanadium oxide and for stirring and agitating the liquid iron in such a way that suitable process control is maintained.

The present invention uses one or more elongate lances of suitable material, that allow oxygen to be passed therethrough in conjunction with at least one coolant gas, shroud or material. This serves to cool the reaction zone and maintain process control, while simultaneously enabling the reaction gases formed to stir and agitate the liquid iron; this allows fresh vanadium rich iron to circulate into the reaction zone and vanadium oxide slag formed to float to the surface.

Additional process control can further be obtained by making a lance in such a manner that it can be lowered or raised into and from a container of vanadium containing liquid iron, as well as having a circular or rotational (stirring) motion or moment applied thereto, and within the container. For this purpose one or more lances can be suitably mounted in appropriate frames and are attached or connected to actuating means to permit a lowering and raising moment, and/or a circular or stirring moment or action to be applied or imparted thereto.

Further to the oxidation of the vanadium in the liquid iron, the same system allows further process control by the addition of carbon or to recarbonise the liquid iron, to make it of a satisfactory composition for the vanadium oxidation process or subsequent steelmaking. Process control is even further enhanced then by the ability to add oxygen when excess carbon is present, whereby the carbon can be oxidised to give additional thermal energy, thereby ensuring that adequate superheat is available in the liquid iron. This prevents (or at least minimises) any tendency to start solidifying which leads to yield losses; equally it ensures that the liquid iron has sufficient chemical and thermal energy for subsequent steelmaking.

This method has relatively low operating costs, is relatively cheap compared to other systems in capital cost, gives very good process control, is relatively simple, provides a relatively fast reaction time, and can significantly reduce pollution control requirements, (as it generates very little obnoxious dust or fumes).

In the present invention, a ladel or container 1 is provided and used in a manner which is such as to preferably only require a tilting or pivotal mechanism (not shown) or action for removal of slag therefrom. For example, the ladel or container 1 can be suitably mounted so that it can tilt about an axis or pivot point to enable removal of slag. This is by way of example only however and it is envisaged that other forms of container or ladel can be used.

The present invention is described with reference to Figure 1 of the drawings whi.:h shows only one lance 2. This is by way of example only, and a plurality of such lances can be provided if desired.

Referring therefore to Figure 1 of the accompanying drawings, molten metal 3 is shown located in a refractory lined ladel or container 1.
The lance 2 extends into and below the surface of, the molten metal 3 containing vanadium, so as to be at least partially emersed in said molten metal. The lance 2 is substantially elongate in form and is coated in a suitable refractory material such as herein described. A suitable refractory lined lid or closure member 5 is also provided.

The elongate lance 2 is formed or provided with at least one bore or hole 7 passing therethrough, and is capable of being attached or connected, in any suitable manner, and by any suitable means, to a supply of oxygen 8 and to a supply of one or more coolant gas or shroud 9. Gases capable of being used as a coolant gas or shroud are described herein by way of example.

In use therefore, the oxygen and a coolant gas or shroud are passed through the lance 2 to exit therefrom at the end 2a thereof; or as in a preferred form of the invention, through a plurality of peripheral exit ports 15 along and about the lance 2. Preferably, a plurality of symmetrical, spaced apart, peripheral ports 15 are provided about the lance 2, which have been found to reduce vibrations and loadings in the lance. The ports 15 are provided in the lance 2, in that portion of the lance that will be below the surface of the molten metal. Also, such ports 15 have been found to at least decrease (if not to remove) the possibility of a lance or lances burning ladel bottom refractories, adjacent a normal exit of the oxygen from the lance (as at 2a for example), which may happen if oxygen exits only from the end 2a of a lance, adjacent a ladel bottom 1a.

It will be appreciated therefore that as stated herein, there are a number of advantages in providing the lance with one or more (but preferably a plurality of) ports 15.

Referring again to the accompanying drawing; on the oxygen and cooling gas passing into the molten metal 3 containing vanadium (and below the surface 4 thereof) the molten metal 3 agitates and circulates, this allowing fresh vanadium rich iron to circulate into the reaction zone adjacent the one or more lances 2, and the vanadium oxide slag formed to float to the surface 4. This is shown as a vanadium oxide slag 6 in the accompanying drawing.

In one form of the invention the lance 2 is formed with an inner or centre tube or pipe 11 and an outer tube or pipe 10, these being substantially co-axial and concentric within the bore 7 of the lance 2. For example the inner pipe 11 may be connected to a source of oxygen and will carry the oxygen. The outer pipe or annulus 10 may carry the coolant gas or shroud about the oxygen, and will be connected to an appropriate source of coolant gas.

As referred to hereinbefore, the one or more lances 2 are able to be lowered and/or raised into and from the container or ladel 1 and the molten metal 3. The lance(s) 2 can also have a rotatable or circular moment applied thereto by suitable means (not shown).

The passage of the oxygen through the lance 2 and into the liquid molten material 3 thus agitates and circulates the molten material 3 and allows fresh vanadium rich iron to circulate into the reaction zone, and the vanadium oxide slag 6 formed to float to the surface. Suitable means (not shown) such as for example the pivoting or tipping of the ladel, can then be used to remove the slag 6 from the surface of the molten metal.

The lance or lances 2 are preferably provided with the one or more peripheral exit ports 15. It has been found that by increasing the number of exit ports about the lance (below the surface 4 of the molten metal 3) this serves to reduce oxygen input per reaction zone which in turn has been found to reduce reaction zone temperature which leads to a better or increased vanadium recovery rate.

Peripheral ports 15 have, as stated hereinbefore, been found to reduce the vibration and loadings on the lances 2 from gaseous reactions that would otherwise occur beneath it.

In addition, ports 15 in the lance 2 have been found to at least decrease if not to remove the possibility of the lance of lances burning the ladel bottom refractories. It is also a real advantage in locating the lance(s) 2 so that the bottom or tip 2a thereof is spaced apart from a container or ladel bottom 1a.

The one or more lances 2 are supported above the

ladel or container 1 in a suitable support or frame and if desired are replaceable. The lances are subject to extreme heat and pressure, and thus may be required to be replaced from time to time.

Various materials have been used to form the lance, including for example stainless steel and mild steel, strengthened with outer twigs or reinforcing. This is by way of example however, and other materials can be used.

It has been generally found that by decreasing the metal temperature throughout the blow vanadium extraction efficiency is increased.

Gases used as coolant or shroud gases, can for example be: liquid petroleum gas (LPG); Carbon dioxide $(CO_2)$; compressed natural gas (CNG); and Nitrogen $(N_2)$. These are by way of example however. Other known and available gases and shrouds can have equal application.

The lance emersion depth in the molten metal can vary depending upon the metal depth, but for example, when depth of metal in the ladel varies from between 670 to 750 millimetres, the lance emersion depth can vary from for example between 480 to 570 millimetres. Even with a high degree of turbulence in a ladel it is not found that this variation has any significant effect on vanadium extraction.

In certain circumstances, it was noted during experimentation that with the lance tip or end close to or adjacent a ladel bottom, there is some ladel refractory loss. This occured when there was an oxygen blow rate of 25 $Nm^3$/hr and the lance tip was 60-90 millimetres from the ladel bottom. The general operating distance was 150-200 millimetres and with oxygen rates up to 37 $Nm^3$/hr. In these circumstances no refractory loss was noted. It is therefore desirable that the tip or end 2a of the lance be spaced apart from the bottom of the ladel, to thereby avoid or at least decrease ladel refractory loss, or damage.

It has been noted that during experimentation of the invention, splash occurs, relating to the blow rate, and it is noted that there is a relationship between splash and vanadium content.

For example, if the vanadium content is above 0.3% then there is little to no splash on entry. However, 5 to 15 minutes later, slight splashing begins and this generally happens when the vanadium content has been reduced to 0.25 - 0.3%. Later on in the blow, when the vanadium content is down below 0.1% there is a further increase in splash. At this stage it is found that splashing is sometimes so bad as to require termination of the blow.

It is considered that the increased splashing is caused by the higher carbon burn-off producing greater quantities of CO gas.

A lower blow rate would reduce splashing at the end of the blow if it is found economic to reduce vanadium content below 0.1%.

Generally speaking however, in more efficient blows, excessive carbon burn off has not started until 0.05% V, so this splash can be used as a means or method for determining when to cease a blow.

When LPG is used as the coolant gas or shroud, it is considered that this is a major splash contributing factor and can be so bad that a close fitting lid is used to keep the metal in the ladel or container.

Providing there is sufficient vanadium in the metal, an increase in oxygen blow rate alone does not cause any increase in splash.

At the start of a blow or process, with the oxygen and coolant gas or shroud passing through the lance or lances, the splash tends to solidify on the ladel rim which helps to seal the splash in. However, in the later part of the blow there could be a "break out" in the seal and considerable metal could pour over the side.

Slag formed by the method of the invention, floats freely on the molten metal, and the slag can be recovered quite easily from the metal. In experiments, slag recovery has been estimated in some cases, to be better than 95%.

In the present invention, the ladel used to contain the molten metal, is coated with a suitable refractory such as for example Fyreplast 80. By way of example, during a pilot plant operation, the ladels had an overall depth of 930 millimetres. The average metal depth used was 700 millimetres (1300 kg metal) which left an effective 230 millimetre freeboard. The ladel diameter of metal level was 700 millimetres and with a 150 millimetre diameter lance allowance, this gave a metal surface area of $0.367m^2$ during the blowing operation.

By way of example only, and referring to the blow rate of oxygen passing through the lance, the following is by way of example.

Oxygen Blowing Rate - Operating Conditions - Metal Weight 1300 kg
- Oxygen Consumption 10 Nm³

| Oxygen Blow Rate Nm³/hr | Coolant Gas | | wt % C | | wt % V | | Temperature °C | |
|---|---|---|---|---|---|---|---|---|
| | Gas | Nm³/hr | Initial | Final | Initial | Final | Initial | Final |
| 10 | LPG | 0.5 | 4.72 | 4.09 | .32 | .09 | 1335 | 1276 |
| 15 | LPG | 0.8 | 4.32 | 4.15 | .49 | .15 | 1340 | 1326 |
| 20 | CNG | 2.0 | 3.91 | 3.68 | .40 | .10 | 1300 | 1360 |
| 25 | CNG | 2.3 | 4.16 | 3.81 | .40 | .10 | 1320 | 1337 |
| 30 | CNG | 2.5 | 4.02 | 3.70 | .37 | .12 | 1310 | 1340 |

Further by way of example, the shroud gas operating conditions, being the coolant or shroud gas, and giving details of the alternatives LPG, CO2, CNG and N2,(are by way of example):

Shroud gas - operating conditions = Metal Weight 1300 kg
- Oxygen Flow 20 m³/hr
- Blow Time - 30 minutes.

| Shroud Gas Gas | Shroud Gas Flow Nm³/hr | wt % C Initial | wt % C Final | wt % V Initial | wt % V Final | Temperature °C Initial | Temperature °C Final |
|---|---|---|---|---|---|---|---|
| LPG | 1.0 | 4.20 | 3.71 | .30 | .07 | 1325 | 1321 |
| CO₂ | 1.0 | 3.94 | 3.60 | .40 | .09 | 1315 | 1370 |
| CNG | 2.0 | 3.91 | 3.68 | .40 | .10 | 1300 | 1360 |
| N₂ | 2.0 | 3.93 | 3.73 | .43 | .09 | 1305 | 1366 |

From this operation, specific oxidation rates, from experimentation are shown as:

Specific Oxidation Rates - Operating Conditions

| | |
|---|---|
| - Metal Weight | 1280 kg |
| - Oxygen Blow | 20 m³/hr |
| - Shroud $N_2$ | 1 m³/hr |
| - Blow Time | 28 minutes |

| | C | Mn | Si | V | Ti | Temperature °C |
|---|---|---|---|---|---|---|
| Initial | 3.96 | .21 | .36 | .41 | .23 | 1310 |
| Final | 3.81 | .03 | .06 | .12 | Nil | 1370 |

Oxidation Rates
- C — approx linear – average $4.3 \times 10^{-3}$ wt%/min
- Mn — " " " $6.4 \times 10^{-3}$ "
- Si — " " " $10.0 \times 10^{-3}$ "
- V — " " " $10.0 \times 10^{-3}$ "
- Ti — non linear – average over first 15 minutes approx $13 \times 10^{-3}$ wt%/min.

In operation details of a lance by way of example, are:

Lance Details.

Centre pipe area          =        $23.41mm^2$

Outer annulus area        =        $7.55mm^2$

This lance was enclosed by a 40mm diameter m/s strengthening pipe with outer twigs. Unit was then cast in a 150 mm ID former with Purotab castable containing 3% ss needles. Alternatively prefired sleeves were used with an inner castable mix. There was no lance burnback during blowing of a low metalloid iron

Specific blowrates used were:

Oxygen  $0.7-2.1 \times 10^{-2}$ $Nm^3/min/mm^2$

Shroud  $1.1-6.6 \times 10^{-3}$ $Nm^3/min/mm^2$

In so far as temperature is concerned, it has generally been found that decreasing the metal temperature increases the vanadium extraction efficiency V/C loss ratio. Thus, by way of example:

Operating Conditions: Metal Weight        1320 kg
                       Oxygen Flow.         20 m$^3$/hr
                       Shroud Gas LPG        1 m$^3$/hr
                       Blow Time            30 minutes

| | wt % C | | wt % V | | V/C | Temperature $^{o}$C | |
|---|---|---|---|---|---|---|---|
| | Initial | Final | Initial | Final | | Initial | Final |
| High Temp. | 3.92 | 3.37 | .43 | .09 | 0.63 | 1390 | 1393 |
| Low Temp. | 4.58 | 4.15 | .43 | .06 | 0.83 | 1275 | 1330 |

In so far as the lances are concerned, various refractories have been tested and appropriate coatings and refractories are utilised to provide the lances with adequate heat resistance and strength. This will also prevent or at least minimise as far as possible, refractory burn back. It is envisaged that a unitary or multiple piece pre-fired sleeve can be utilised to advantage.

Suitable refractories in the form of reinforced castables can also be used. Stainless steel needles were added to the castables to improve performance which was achieved.

For example, and as referred to above, a lance can be enclosed for 40 millimetre diameter mild steel strengthening pipe with outer strengthening twigs, the unit being cast in a 150 millimetre ID former with Purotab castable containing 3% stainless steel needles. Alternatively, as discussed and given by way of example above, pre-fired sleeves can be used with an inner castable mix. This gave no lance burn back during blowing of a low metalloid iron.

It should be appreciated that modifications and improvements may be made to this invention without departing from the scope or spirit thereof, as defined by the appended claims.

WE CLAIM:

1. A method of recovering vanadium oxide from molten metal characterised in that oxygen (8) and at least one coolant gas or shroud (9) are passed into said molten metal (3), through at least one elongate lance (2).

2. A method as claimed in claim 1, characterised in that the lance (2) extends below the surface (4) of said molten metal (3).

3. A method as claimed in claim 1 or claim 2, characterised in that oxygen (8) and coolant gas (9) exit from said lance (2) through a plurality of spaced apart ports (15) below the surface (4) of the molten metal (3).

4. An arrangement for the recovery of vanadium oxide from molten metal, characterised in that at least one elongate lance (2) extends into molten metal (3), said lance (2) being provided with at least one elongate bore (7) extending therethrough; means being provided to allow at least oxygen (8) and at least one coolant gas or shroud (9) to pass through said lance (2) and into said molten metal (3).

5. An arrangement as claimed in claim 4 characterised in that a plurality of spaced apart peripheral ports (15) are provided in said lance (2) below the surface (4) of the molten metal (3).

6. An arrangement as claimed in claim 4 or claim 5, characterised in that the molten metal (3) is provided within a ladel or container (1); said lance (2) extend-

-20-

0134351

ing into the container (1) such that its end (2a) is spaced apart from the ladel or container bottom (1a).

7. An arrangement as claimed in any one of the preceding claims 4 to 6, characterised in that the lance (2) is able to be lowered and raised into and from said molten metal (3); means being provided to impart a circular or rotational moment to said lance (2).

8. An arrangement as claimed in any one of the preceding claims 4 to 7, wherein said lance (2) includes at least two substantially concentric, co-axial tubes or pipes (10, 11); oxygen (8) passing through at least an inner tube or pipe (11); coolant gas or shroud (9) passing through an outer tube or pipe (10).

0134351

FIG. 1.

# European Patent Office

## EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | AT-B- 185 831 (WESTFALENHÜTTE)  * Page 1; claims 1, 2 * | 1,2,4 | C 22 B 34/22  C 21 C 1/04  C 21 C 5/46 |
| X | US-A-4 071 355 (J.O. STAGGERS)  * Abstract * | 1 | |
| A | GB-A-1 448 237 (MAXHÜTTE) | | |
| A | US-A-3 945 820 (K. BROTZMANN et al.) | | |
| A | Patent Abstracts of Japan vol. 6, no. 102, 11 June 1982 & JP-A-57-32314 | | |
| A | Patent Abstracts of Japan vol. 6, no. 31, 24 February 1982 & JP-A-56-150115 | | |
| A | DE-C- 409 487 (R.H. VON SETH) | | |
| A | DE-A-1 433 318 (HIGHVELD) | | |

**TECHNICAL FIELDS SEARCHED (Int. Cl. ³)**

C 22 B 34/22
C 21 C 1/04
C 21 C 5/46

The present search report has been drawn up for all claims

| Place of search  BERLIN | Date of completion of the search  28-12-1983 | Examiner  SUTOR W |
|---|---|---|